# Europäisches Patentamt
## European Patent Office
### Office européen des brevets

(11) Publication number: **0 068 689**
**B1**

(12) **EUROPEAN PATENT SPECIFICATION**

(45) Date of publication of patent specification: **02.01.86**

(51) Int. Cl.⁴: **H 02 G 7/20**

(21) Application number: **82303029.1**

(22) Date of filing: **11.06.82**

(54) Improvements in overhead electric transmission lines.

(30) Priority: **12.06.81 GB 8118054**

(43) Date of publication of application:
**05.01.83 Bulletin 83/01**

(45) Publication of the grant of the patent:
**02.01.86 Bulletin 86/01**

(84) Designated Contracting States:
**AT BE CH DE FR IT LI LU NL SE**

(56) References cited:
**DE-A-2 656 607**
**DE-A-2 820 926**
**DE-A-2 824 726**
**DE-A-2 916 108**
**DE-A-2 941 895**
**DE-B-1 283 313**

(73) Proprietor: **BALFOUR BEATTY LIMITED**
**7 Mayday Road**
**Thornton Heath Surrey CR4 7XA (GB)**

(72) Inventor: **Adam, John Francis**
**48 Elkington Road**
**Yelvertoft Northampton (GB)**

(74) Representative: **Ross Gower, Edward Lewis**
**et al**
**BICC plc Patents and Licensing Department**
**38 Ariel Way Wood Lane**
**London W12 7DX (GB)**

Courier Press, Leamington Spa, England.

## Description

This invention relates to overhead electric transmission lines of the kind in which an electric conductor or a plurality of electric conductors is or are suspended in long lengths between pylons or other upstanding supporting structures at spaced positions along the length of the line, all such supporting structures hereinafter, for convenience, being included in the generic term "pylon".

The invention is particularly concerned with overhead electric transmission lines of this kind in which single electric conductors or separate groups of electric conductors are suspended from a transversely extending crossarm or transversely extending crossarms of each of a number of spaced pylons by insulators or strings of insulators, each single conductor being suspended from a crossarm of each pylon by at least two mutually spaced insulators or strings of insulators or the conductors of each group being transversely spaced apart and each conductor of the group being suspended from a crossarm of each pylon by a separate insulator or by a separate string of insulators of a group of mutually spaced insulators or strings of insulators, in both cases the insulators or strings of insulators being interconnected at their lower ends by at least one link. An overhead electric transmission line of this particular kind will hereinafter be referred to as "of the kind described" .

Usually, but not necessarily, each conductor or each separate group of conductors is supported by two mutually spaced insulators or strings of insulators and, where the context permits, the invention will be described with respect to overhead electric transmission lines of the kind described in which each conductor or each group of conductors is supported by two mutually spaced insulators or strings of insulators, but it is to be clearly understood that the invention is also applicable to the case where each conductor or each group of conductors of an overhead line is supported by three or more than three mutually spaced insulators or strings of insulators.

It has been found that where an insulator of a string of insulators of two mutually spaced insulators or strings of insulators supporting a conductor or a group of transversely spaced conductors of an overhead electric transmission line of the kind described is damaged to such an extent that the insulator or string of isolators is fractured, the sound insulator or sound string of insulators is subject to stresses caused by application to the sound insulator or sound string of insulators of the load hitherto supported by the fractured insulator or fractured string of insulators. There is a substantial risk that, as a result of these stresses, the sound insulator or sound string of insulators will also fracture and cause complete breakdown of the line and possible consequential damage to one or more of the pylons. There is an additional risk that, due to transitory effects caused in the parts of the fractured insulator or fractured string of insulators and in the sound insulator or sound string of insulators due to fracture of the insulator or string of insulators, collision of the insulators or strings of insulators may occur, damage to the hitherto sound insulator or sound string of insulators may result, and consequential damage to one of more pylons may follow.

One proposal for reducing the risk of fracture of a sound insulator or sound string of insulators of a group of mutually spaced insulators or strings of insulators arising from fracture of the other or another insulator or string of insulators of the group is described in DE 28 20 926. In this proposal, a damping strap is interconnected between the lower end of each insulator or string of insulators of the group and a linkage which interconnects the lower ends of the insulators or strings of insulators of the group and from which a conductor is suspended. The damping straps are not mechanically loaded when the insulators or strings of insulators of the group are in a sound condition. When an insulator or string of insulators of the group fractures and the linkage pivots about its interconnection to the lower end of a sound insulator or string of isolators or about another axis, the distance between the points of connection of the or each damping strap to the sound insulator or sound string of insulators and the linkage changes and one or more than one damping strap is subjected to a tensile force and one or more than one of the damping straps may be subjected to a compressive force which lead to bending stresses causing deformation of the damping straps. Such deformation dampens any shock loading on the sound insulator or sound string of insulators. The arrangment of this prior proposal has the disadvantage that, although the damping straps dampen the shock load on a sound insulator or insulators of sound string or strings of insulators of a group arising from fracture of an insulator or string of insulators of the group, the or each damping strap does not reduce risk of fracture of a sound insulator or sound string of insulators should the load arising from fracture of an insulator or string of insulators exceed the maximum safe working load of the sound insulator or sound string of insulators and increase towards the load at which the insulator or string of insulators will fracture.

Several other proposals have been made for reducing the risk of fracture of a sound insulator or sound string of insulators of a group of mutually spaced insulators or strings of insulators arising from fracture of the other insulator or string of insulators of the group but, for various reasons, none of these proposals has proved satisfactory in a sufficiently wide range of conditions likely to be met in service and the problem of protecting a sound insulator or sound string of insulators of such a group from stresses arising from fracture of the other or another insulator or string of insulators of the group is still therefore not completely resolved.

It is an object of the present invention to provide an improved solution to this problem.

According to the invention, an overhead electric transmission line comprises single electric conductors or separate groups of electric conductors suspended from a transversely extending crossarm or transversely extending crossarms of each of a number of spaced pylons by insulators or strings of insulators, each single conductor being suspended from a crossarm of each pylon by a group of at least two mutually spaced insulators or strings of insulators of the conductors of each group being transversely spaced apart and each conductor of the group being suspended from a crossarm of each pylon by a separate insulator or by a separate string of insulators of a group of mutually spaced insulators or strings of insulators, in both cases the insulators or strings of insulators being interconnected at their lower ends by at least one link and, at at least one of said pylons, the mutually spaced insulators or strings of insulators of the group having associated energy dissipating means which, when fracture of an insulator or string of insulators of the group causes an additional load to be applied to the or each sound insulator or sound string of insulators of the group, will deform to dissipate the energy arising from said additional load, and the overhead electric transmission line is characterised in that the energy dissipating means is of such a form that, as the load on the or each sound insulator or sound string of insulators increases to the maximum safe working load, the energy dissipating means is elastically extensible in a rectilinear direction substantially parallel to the longitudinal axis of the insulator or string of insulators and, as the load on the or each sound insulator or sound string of insulators exceeds the maximum safe working load and increases towards the load at which the insulator or string of insulators will fracture, the energy dissipating means smoothly and continuously extends permanently in said rectilinear direction to reduce substantially risk of fracture of the insulator or string of insulators.

Preferably, the elastic extensibility of the energy dissipating means is at least partially damped, the effectiveness of said damping ceasing to have effect as the value of the load on the or each sound insulator or sound string of insulators reaches or just exceeds the maximum safe working load.

Where each insulator or each string of insulators of a group of mutually spaced insulators or string of insulators is separately suspended from a crossarm of a pylon, an energy dissipating means may be interconnected between said insulator or string of insulators and its point of suspension. Where the insulators or strings of insulators of a group of mutually spaced insulators or strings of insulators are interconnected at their upper ends by at least one link and the link or links is or are suspended from a crossarm of a pylon at a single position, said energy dissipating means may be connected between the link or links and the single point of suspension and/or between the link or links and each insulator or string of insulators of the group.

Energy dissipating means may additionally or alternatively be interconnected between the lower end of each insulator or string of insulators of a group of mutually spaced insulators or strings of insulators and the link or links interconnecting the lower ends of the insulators or strings of insulators and/or between the lower end of the link or links interconnecting the lower ends of the insulators or strings of insulators and the or each conductor-supporting clamp.

Preferably, the energy dissipating means comprises one or more than one substantially rigid elongate member or metal or metal alloy which is curved or otherwise shaped between its ends, the curved or shaped parts of the elongate member lying in a substantially common plane.

Where the energy dissipating means is a single substantially rigid elongate member, the member is preferably symmetrical about its longitudinal axis and is preferably formed between its ends into two loops lying in a substantially common plane and on directly opposite sides of said longitudinal axis. Damping of the resilience of the substantially rigid member may be effected by forming the member into a shape approximating to that of a figure eight and clamping the adjacent central parts of the member together by a bolt or other means designed to fracture at a load equal to or slightly greater than the maximum safe working load of the insulator or string of insulators.

Where the energy dissipating means comprises two or more substantially rigid elongate members, preferably it consists of two substantially rigid elongate members symmetrically arranged side by side on opposite sides of the longitudinal axis of the insulator or string of insulators, or of the group of insulators or strings of insulators, and connected together at or near each of their ends, each substantially rigid elongate member being formed between its ends into a curved portion of apparoximately semi-circular shape, the semi-circular shaped portions of the two substantially rigid elongate members lying in a substantially common plane.

In all cases, preferably the or each substantially rigid elongate member constituting the energy dissipating means is made of a mild steel or of an aluminium based alloy.

The invention is further illustrated by a description, by way of example, of two preferred forms of energy dissipating means for use in an overhead electric transmission line with reference to the accompanying diagrammatic drawings, in which:—

Figure 1 is a fragmental front view of an overhead electric transmission line;

Figure 2 is a representation of the first form of energy dissipating means; and

Figure 3 is a representation of the second form of energy dissipating means.

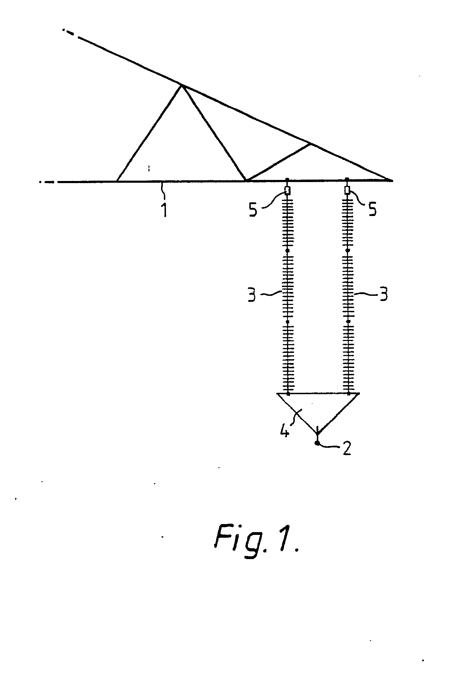

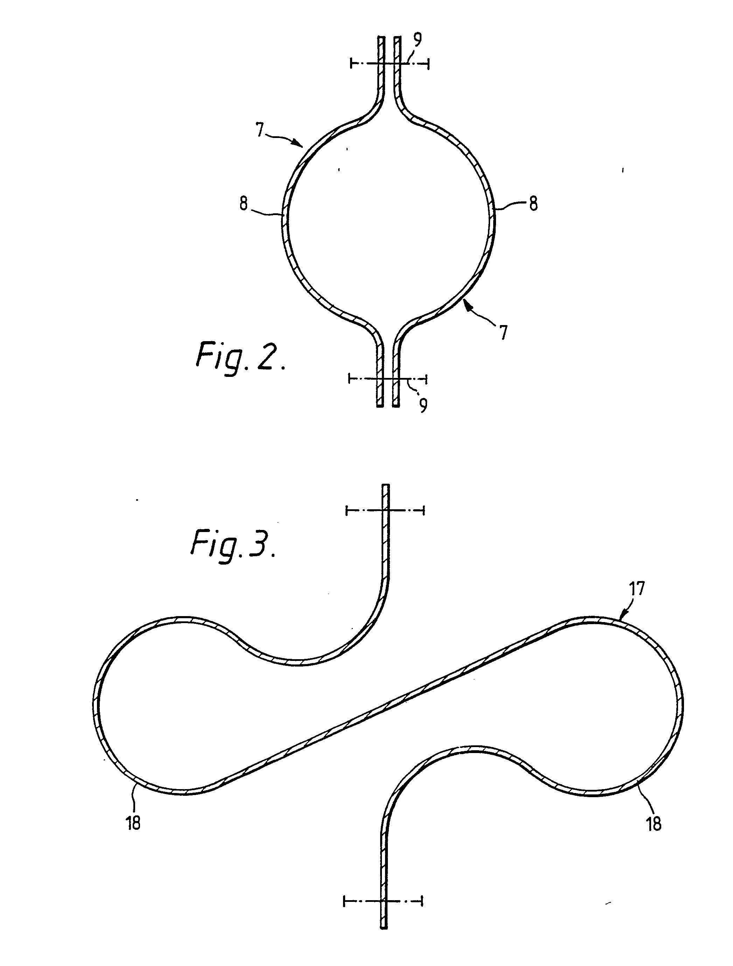

Referring to the drawings, the overhead electric transmission line shown in Figure 1 comprises a

3

crossarm 1 of a pylon (not shown) from which a single conductor 2 is suspended by two transversely spaced strings of unsulators 3 and a link 4. Each string of insulators 3 is attached to the crossarm 1 by an energy dissipator 5. The energy dissipators 5 may each be of the form of energy dissipating means shown in Figure 2 or of the form of energy dissipating means shown in Figure 3.

The energy dissipator shown in Figure 2 comprises two mild steel strips 7 each formed between its ends into a curved portion 8 of approximately semi-circular shape, the semi-circular shaped portions of the two strips lying in a substantially common plane, and the two strips are connected at their ends by bolts 9 to form, between their interconnected ends, a substantially complete circle.

The energy dissipating means shown in Figure 3 comprises a single mild steel strip 17 which, between its ends, is formed into two loops 18 lying in a substantially common plane and on directly opposite sides of the longitudinal axis of the strip.

With the energy dissipatcng means shown in Figure 2 or Figure 3 constituting the energy dissipators 5 employed in the transmission line shown in Figure 1, in the event of fracture of one of the insulator strings 5 as the load on the sound string of insulators increases to the maximum safe working load, each strip 7 or the strip 17 is elastically extensible and, as the load on the sound string of insulators exceeds the maximum safe working load and increase towards the load. at which the sound string of insulators will fracture, each strip 7 or the strip 17 will permanently extend smoothly and continuously in a rectilinear direction substantially parallel to the longitudinal axis of the sound string of insulators thereby to reduce substantially risk of fracture of the sound string of insulators.

**Claims**

1. An overhead electric transmission line comprising single electric conductors (2) or separate groups of electric conductors suspended from a transversely extending crossarm (1) or transversely extending crossarms of each of a number of spaced pylons by insulators or stings of insulators (3), each single conductor being suspended from a crossarm of each pylon by a group of at least two mutually spaced insulators or strings of insulators or the conductors of each group being transversely spaced apart and each conductor of the group being suspended from a crossarm of each pylon by a separate insulator or by a separate string of insulators of a group of mutually spaced insulators or strings of insulators, in both cases the insulators or strings of insulators being interconnected at their lower ends by at least one link and, at at least one of said pylons, the mutually spaced insulators or strings of insulators of the group having associated energy dissipating means (5) which, when fracture of an insulator or string of insulators of the group causes an additional load to be applied to the or each sound insulator or sound string of insulators of the group, will deform to dissipate the energy arising from said additional load, characterised in that the energy dissipating means (5) is of such a form that, as the load on the or each sound insulator or sound string of insulators increases to the maximum safe working load, the energy dissipating means is elastically extensible in a rectilinear direction substantially parallel to the longitudinal axis of the insulator or string of insulators and, as the load on the or each sound insulator or sound string of insulators exceeds the maximum safe working load and increases towards the load at which the insulator or string of insulators will fracture, the energy dissipating means smoothly and continuously extends permanently in said rectilinear direction to reduce substantially risk of fracture of the insulator or string of insulators.

2. An overhead electric transmission line as claimed in Claim 1, characterised in that at each of said pylons, each insulator or string of insulators (3) of the or each group of mutually spaced insulators or strings of insulators has an associated respective energy dissipating means (5).

3. An overhead electric transmission line as claimed in Claim 1 or 2, characterised in that the elastic extensibility of the energy dissipating means (5) is at least partially damped, the effectiveness of said damping ceasing to have effect as the value of the load on the or each sound insulator or sound string of insulators (3) reaches or just exceeds the maximum safe working load.

4. An overload transmission line as claimed in any one of the preceding Claims in which each insulator or each string of insulators of the or each group is separately suspended from the crossarm (1), characterised in that an energy dissipating means (5) is interconnected between said insulator or string of insulators (3) and its point of suspension.

5. An overload electric transmission line as claimed in any one of Claims 1 to 3 in which the insulators or strings of the or each group are interconnected at their upper ends by at least one link and the link or links is or are suspended from the crossarm (1) at a single position, characterised in that said energy dissipating means (5) is connected between the link or links and the single point of suspension and/or between the link or links and each insulator or string of insulators (3) of the group.

6. An overhead electric transmission line as claimed in any one of the preceding Claims, characterised in that energy dissipating means (5) is interconnected between the lower end of each insulator or string of insulators (3) of the or each group and the link or links (4) interconnecting the lower ends of the insulators or strings of insulators and/or between the lower end of the link or links interconnecting the lower ends of the insulators or strings of insulators and the of each conductor-supporting clamp.

7. An overhead electric transmission line as claimed in any one of the preceding Claims, characterised in that the energy dissipating means (5) comprises one or more than one substantially rigid elongate member (7, 17) of metal alloy which is curved or otherwise shaped between its ends, the curved or shaped parts of the elongate member lying in a substantially common plane.

8. An overhead electric transmission line as claimed in Claim 7, characterised in that the energy dissipating means (5) is a single substantially rigid elongate member (17) which is so shaped that it is symmetrical about its longitudinal axis and is formed between its ends into two loops (18) lying in a substantially common plane and on directly opposite sides of said longitudinal axis.

9. An overhead electric transmission line as claimed in claim 8, characterised in that the member (17) is formed into a shape approximating to that of a figure eight and adjacent central parts of the member are clamped together by a bolt or other means designed to fracture at a load equal to or slightly greater than the maximum safe working load of the insulator or string of insulators.

10. An overhead electric transmission line as claimed in Claim 7, characterised in that the energy dissipating means (5) comprises two substantially rigid elongate members (7) symmetrically arranged side by side on opposite sides of the longitudinal axis of the insulator or string of insulators, or of the group of insulators or strings of insulators, and connected at or near each of their ends, each substantially rigid elongate member being formed between its ends into a curved portion (8) of approximately semi-circular shape, the semi-circular shaped portions of the two substantially rigid elongate members lying in a substantially common plane.

**Patentansprüche**

1. Elektrische Übertragungsfreileitung mit einzelnen elektrischen Leitern (2) oder getrennten Gruppen elektrischer Leiter, die an einem sich transversal erstreckenden Querarm (1) oder sich transversal erstreckenden Querarmen jedes Pylons einer Anzahl beabstandeter Pylone mittels Isolatoren oder Isolatorenketten (3) aufgehängt sind, wobei jeder einzelne Leiter an einem Querarm jedes Pylons mittels einer Gruppe von mindestens zwei gegenseitig beabstandeten Isolatoren oder Isolatorenketten aufgehängt ist oder die Leiter jeder Gruppe transversal voneinander beabstandet sind und jeder Leiter jeder Gruppe an einem Querarm jedes Pylons mittels eines getrennten Isolators oder mittels einer getrennten Isolatorenkette einer Gruppe gegenseitig beabstandeter Isolatoren oder Isolatorenketten aufgehängt ist, wobei in beiden Fällen die Isolatoren oder Isolatorenketten an ihren unteren Enden durch mindestens ein Verbindungsglied miteinander verbunden sind und die gegenseitig beabstandeten Isolatoren oder Isolatorenketten an mindestens einem der Pylone eine zugeordnete Energiedissipationseinrichtung (5) aufweisen, die sich beim Bruch eines Isolators oder einer Isolatorenkette der Gruppe und beim dadurch bewirkten Auftreten einer zusätzlichen, auf den oder jeden unbeschädigten Isolator oder die oder jede unbeschädigte Isolatorenkette der Gruppe ausgeübten Last deformiert und die durch die zusätzliche Last hervorgerufene Energie aufnimmt, dadurch gekennzeichnet, daß die Energiedissipationseinrichtung (5) derart ausgebildet ist, daß sie in geradliniger Richtung im wesentlichen parallel zur Längsachse des Isolators oder der Isolatorenkette elastisch dehnbar ist, wenn die Last auf den oder jeden unbeschädigten Isolator oder auf die oder jede unbeschädigte Isolatorenkette auf die maximal zulässige Betriebslast ansteigt, und daß sich die Energiedissipationseinrichtung gleichmäßig und kontinuierlich permanent in der geradlinigen Richtung ausdehnt, wenn die Last auf den oder jeden unbeschädigten Isolator oder auf die oder jede unbeschädigte Isolatorenkette die maximal zulässige Betriebslast übersteigt und in Richtung auf diejenige Last ansteigt, bei der der Isolator oder die Isolatorenkette bricht, wodurch die Gefahr eines Bruches des Isolators oder der Isolatorenkette wesentlich verringert wird.

2. Elektrische Übertragungsfreilentung nach Anspruch 1, dadurch gekennzeichnet, daß an jedem Pylon jeder Isolator oder jede Isolatorenkette (3) der oder jeder Gruppe gegenseitig beabstandeter Isolatoren oder Isolatorenketten eine jeweils zugeordnete Energiedissipationseinrichtung (5) aufweist.

3. Elektrische Übertragungsfreileitung nach Anspruch 1 oder 2, dadurch gekennzeichnet, daß die elastische Dehnbarkeit der Energiedissipationseinrichtung (5) mindestens teilweise gedämpft ist, wobei diese Dämpfung unwirksam wird, wenn der Wert der Last auf den oder jeden unbeschädigten Isolator oder auf die oder jede unbeschädigte Isolatorenkette (3) die maximal zulässige Betriebslast erreicht oder eben übersteigt.

4. Elektrische Übertragungsfreileitung nach einem der Ansprüche 1 bis 3, bei der jeder Isolator oder jede Isolatorenkette der oder jeder Gruppe getrennt am Querarm (1) aufgehängt ist, dadurch gekennzeichnet, daß eine Energiedissipationseinrichtung (5) zwischen den Isolator oder die Isolatorenkette (3) und den Aufhängepunkt zwischengeschaltet ist.

5. Elektrische Übertragungsfreileitung nach einem der Ansprüche 1 bis 3, bei der die Isolatoren oder Isolatorenketten der oder jeder Gruppe an ihren oberen Enden durch mindestens ein Verbindungsglied miteinander verbunden sind und das Verbindungsglied oder die Verbindungsglieder um Querarm (1) an einer einzigen Stelle aufgehängt ist oder sind, dadurch gekennzeichnet, daß die Energiedissipationseinrichtung (5) zwischen das Verbindungsglied oder die Verbindungsglieder und den einzigen Aufhängepunkt und/oder zwischen das Verbindungsglied oder die Verbindungsglieder und jeden Isolator oder jede Isolatorenkette (3) der Gruppe zwischengeschaltet ist.

6. Elektrische Übertragungsfreileitung nach einem der Ansprüche 1 bis 5, dadurch gekennzeichnet, daß die Energiedissipationseinrichtung (5) zwischen das untere Ende jedes Isolators oder jeder Isolatorenkette (3) der oder jeder Gruppe und das oder die unteren Enden der Isolatoren oder Isolatorenketten miteinander verbindende Verbindungsglied oder die Verbindungsglieder (4) und/oder zwischen das untere Ende des die unteren Enden der Isolatoren oder Isolatorenketten miteinander verbindenden Verbindungsgliedes oder der Verbindungsglieder die oder jede leitertragende Klammer zwischengeschaltet ist.

7. Elektrische Übertragungsfreileitung nach einem der Ansprüche 1 bis 6, dadurch gekennzeichnet, daß die Energiedissipationseinrichtung (5) ein oder mehrere im wesentlichenstarre, langgestreckte Glieder (7, 17) aus Metall oder einer Metallegierung aufweist, die zwischen ihren Enden gekrümmt oder in anderer Weise geformt sind, wobei die gekrümmten oder geformten Teile des langgestreckten Gliedes im wesentlichen in einer gemeinsamen Ebene liegen.

8. Elektrische Übertragungsfreileitung nach Anspruch 7, dadurch gekennzeichnet, daß die Energiedissipationseinrichtung (5) ein einziges, im wesentlichen starres langgestrecktes Glied (17) ist, das derart geformt ist, daß es um seine Längsachse symmetrisch ist und zwischen seinen Enden zwei Schleifen (18) ausbildet, die im wesentlichen in einer gemeinsamen Ebene und auf direkt gegenüberliegenden Seiten der Längsachse liegen.

9. Elekrische Übertragungsfreileitung nach Anspruch 8, dadurch gekennzeichnet, daß das Glied (17) näherungsweise die Form der Ziffer "8" aufweist und benachbarte Mittelabschnitte des Gliedes mittels eines Bolzens oder anderer Einrichtungen zusammengeklemmt sind, die bei einer der maximal zulässigen Betriebslast des Isolators oder der Isolatorenkette entsprechenden oder geringfügig größeren Last brechen.

10. Elektrische Übertragungsfreileitung nach Anspruch 7, dadurch gekennzeichnet, daß die Energiedissipationseinrichtung (5) zwei im wesentlichen starre langgestreckte Glieder (7) aufweist, die Seite an Seite auf gegenüberliegenden Seiten der Längsachse des Isolators oder der Isolatorenkette oder der Gruppe von Isolatoren oder Isolatorenketten symmetrisch angeordnet und an oder in der Nähe jedes ihrer Enden miteinander verbunden sind, wobei jedes im wesentlichen starre langgestreckte Glied zwischen seinen Enden in einen gekrümmten Abschnitt (8) mit etwa Halbkreisform ausgebildet ist und wobei die halbkreisförmigen Abschnitt de zwei im wesentlichen starren langgestreckten Glieder im wesentlichen in einer gemeinsamen Ebene liegen.

## Revendications

1. Ligne électrique aérienne de transmission comprenant des conducteurs électriques individuels (2) ou des groupes séparés de conducteurs électriques suspendus par des isolateurs ou des chaînes d'isolateurs (3) à une ou des traverses (L) qui s'étendent transversalement et que comporte chaque pylône d'un grand nombre de pylônes espacés, chaque conducteur individuel étant suspendu à une traverse de chaque pylône par un groupe d'au moins deux isolateurs mutuellement espacés ou chaînes d'isolateurs mutuellement espacées, ou bien les conducteurs de chaque groupe étant espacés transversalement l'un de l'autre et chaque conducteur du groupe étant suspendu à une traverse de chaque pylône par un isolateur séparé ou par une chaîne séparée d'isolateurs d'un groupe d'isolateurs ou de chaînes d'isolateurs espacés, les isolateurs ou chaînes d'isolateurs étant dans les deux cas interconnectés à leurs extrémités inférieures par au moins un élément de liaison et, sur au moins un desdits pylônes, les isolateurs ou chaînes d'isolateurs espacés que comporte le groupe possèdent des moyens (5) de dissipation d'énergie associés qui, lorsqu'une rupture d'un isolateur ou d'une chaîne d'isolateurs du groupe entraîne l'application d'une charge additionnelle à l'isolateur ou à chaque isolateur sain, ou à la chaîne ou à chaque chaîne saine d'isolateurs du groupe, se déforme pour dissiper l'énergie produite par ladite charge additionnelle, caractérisée en ce que les moyens (5) de dissipation d'énergie sont d'une forme telle que lorsque la charge sur l'isolateur où chaque isolateur sain, ou sur la chaîne ou chaque chaîne saine d'isolateurs augmente jusqu'à la charge de fonctionnement admissible maximale, les moyens de dissipation d'énergie sont extensibles élastiquement selon une direction rectiligne essentiellement parallèle à l'axe longitudinal de l'isolateur ou de la chaîne d'isolateurs, et lorsque la charge sur l'isolateur ou chaque isolateur sain, ou sur la chaîne ou chaque chaîne saine d'isolateurs dépasse la charge de fonctionnement admissible maximale, et augmente vers la valeur de la charge pour laquelle l'isolateur ou la chaîne d'isolateurs se rompt, les moyens de dissipation d'énergie s'allongent doucement et continuellement selon ladite direction rectiligne afin de réduire fortement le risque de rupture de l'isolateur ou de la chaîne d'isolateurs.

2. Ligne électrique aérienne de transmission selon la revendication 1, cagactérisée en ce que sur chacun desdits pylônes, chaque isolateur ou chaîne d'isolateurs (3) du groupe ou de chaque groupe d'isolateurs mutuellement espacés ou de chaînes d'isolateurs mutuellement espacées possède respectivement un moyen (5) de dissipation d'énergie associé.

3. Ligne électrique aérienne de transmission selon la revendication 1 ou 2, caractérisée en ce que l'extensibilité élastique du moyen (5) de dissipation d'énergie est au moins partiellement affaiblie, l'effet dudit affaiblissement cessant lorsque la valeur de la charge sur l'isolateur ou chaque isolateur sain, ou sur la chaîne ou sur chaque chaîne saine d'isolateurs (3) atteint ou dépasse juste la charge de fonctionnement admissible maximale.

4. Ligne électrique aérienne de transmission selon l'une quelconque des revendications précédentes, dans laquelle chaque isolateur ou chaîne d'isolateurs du groupe ou de chaque groupe est suspendu ou suspendue séparément à la traverse (1), caractérisée en ce qu'un moyen (5) de dissipation d'energie est interconnecté entre ledit isolateur ou ladite chaîne d'isolateurs (3) et son point de suspension.

5. Ligne électrique aérienne de transmission selon l'une quelconque des revendications 1 à 3, dans laquelle les isolateurs ou chaînes d'isolateurs du groupe ou de chaque groupe sont interconnectés à leurs extrémités supérieures par au moins un élément de liaison, et le ou les éléments de liaison sont suspendu à la traverse (1) à une position unique, caractérisée en ce que ledit moyen (5) de dissipation d'énergie est connecte entre le ou les éléments de liaison et le point de suspension unique, et/ou entre le ou les éléments de liaison et chaque isolateur ou chaîne d'isolateurs (3) du gruppe.

6. Ligne électrique aérienne de transmission selon l'une quelconque des revendications précédentes, caractérisée en ce que ledit moyen de dissipation d'énergie est interconnecté entre l'extrémité inférieure de chaque isolateur ou chaîne d'isolateurs (3) du groupe ou de chaque groupe et le ou les éléments de liaison (4) interconnectant les extrémités inférieures des isolateurs, et/ou entre l'extrémité inférieure du ou des éléments de liaison interconnectant les extrémités inférieures des isolateurs ou chaînes d'isolateurs et la pince ou chaque pince supportant un conducteur.

7. Ligne électrique aérienne de transmission selon l'une quelconque des revendications précédentes, caractérisée en ce que le moyen (5) de dissipation d'énergie comprend un ou plusieurs éléments (7, 17) allongés essentiellement rigides en métal ou en alliage métallique, courbés ou d'une autre forme entre leurs extrémités, les parties courbées ou d'une autre forme des éléments allongés se trouvant sensiblement dans le même plan.

8. Ligne électrique aérienne de transmission selon la revendication 7, caractérisée en ce que le moyen (5) de dissipation d'énergie est un élément (17) unique, allongé et essentiellement rigide d'une forme telle qu'il est symétrique par rapport à son longitudinal, et est formé entre ses extrémités de deux boucles (18) se trouvant sensiblement dans le même plan et directement de part et d'autre dudit axe longitudinal.

9. Ligne électrique aérienne de transmission selon la revendication 8, caractérisée en ce que l'élément (17) est approximativement de la forme du chiffre huit, et que les parties centrales adjacentes de l'élément sont fixées ensemble par un boulon ou un autre moyen conçu pour se rompre à une charge égale ou légèrement supérieure à la charge de fonctionnement admissible maximale de l'isolateur ou de chaîne d'isolateurs.

10. Ligne électrique aérienne de transmission selon la revendication 7, caractérisée en ce que le moyen (5) de dissipation d'énergie comprend deux éléments (7) allongés essentiellement rigides disposés symétriquement l'un à côté de l'autre de part et d'autre de l'axe longitudinal de l'isolateur ou de la chaîne d'isolateurs, ou du groupe d'isolateurs ou de chaînes d'isolateurs, et connectés ensemble à chacune de leurs extrémités ou au voisinage de celles-ci, chaque élément allongé essentiellement rigide étant formé entre ses extrémités d'une portion courbée (8) ayant approximativement la forme d'un demicercle, les portions en demi-cercles des deux éléments allongés essentiellement rigides se trouvant sensiblement dans la même plan.

Fig.1.

0 068 689

Fig. 2.

Fig. 3.

2